Europäisches Patentamt

(19) European Patent Office

Office européen des brevets

(11) Publication number : **0 251 285 B1**

(12) **EUROPEAN PATENT SPECIFICATION**

(45) Date of publication of patent specification :
08.04.92 Bulletin 92/15

(51) Int. Cl.⁵ : **C08L 27/12**, C08K 5/02,
// (C08L27/12, 27:16)

(21) Application number : **87109351.4**

(22) Date of filing : **29.06.87**

(54) Curable compositions based on fluoroelastomers vulcanizable with peroxides.

(30) Priority : **30.06.86 IT 2097386**

(43) Date of publication of application :
**07.01.88 Bulletin 88/01**

(45) Publication of the grant of the patent :
**08.04.92 Bulletin 92/15**

(84) Designated Contracting States :
**AT BE DE ES FR GB IT NL SE**

(56) References cited :
**EP-A- 0 131 203**
**US-A- 3 712 877**
**US-A- 4 530 970**
**PATENT ABSTRACTS OF JAPAN, vol. 10, no. 63 (C-332)[2120], 13th March 1986**

(73) Proprietor : **AUSIMONT S.p.A.**
**Foro Buonaparte, 31**
**I-20121 Milano (IT)**

(72) Inventor : **Moggi, Giovanni**
**14, via Galilei**
**I-20124 Milan (IT)**
Inventor : **Cirillo, Gianna**
**8/7, Salita S. Francesco**
**I-16124 Genova (IT)**
Inventor : **Fontana, Alberto**
**47, Corso Lodi**
**I-20139 Milan (IT)**
Inventor : **Modena, Silvana**
**38/a, via Farini**
**I-20159 Milan (IT)**
Inventor : **Ferro, Raffaele**
**65, via Mauro Macchi**
**I-20124 Milan (IT)**

(74) Representative : **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40 (DE)**

**Description**

The present invention relates to the use of vinylidene fluoride telomers and cotelomers containing at least one terminal bromine or iodine atom as additives for fluoroelastomeric compositions vulcanizable with peroxides or with mixed peroxidic and ionic curing systems.

In fluoroelastomeric compositions, the use of coadjuvants is necessary because of the poor extrudability of the compounds, and of the phenomema of adhesion to the moulds, and of fouling thereof.

In the fluoroelastomeric compositions of the prior art, as plasticizers or lubricants of the following types were used:vegetable waxes, low-molecular-weight polyethylene, miscellaneous stearates, polyesters, octadecylamine etc.

The processing coadjuvants of the prior art cause, in some cases, problem of interference with the peroxidic vulcanization system, and problems of poor surface appearance of the moulded article. Furthermore, in the specific case of the fluoroelastomers, for the purpose of endowing them with the well-known properties of heat resistance and resistance to chemical agents and solvents, a "thermal stabilization" (post-cure) at a temperature of from 200° to 250°C for 10 to 30 hours is essential. During this step, the common plasticizers (polyglycols, stearates, organic phosphates, oleates, phthalates, etc.) volatilize and/or decompose. This causes a considerable decay in the mechanical properties of the finished articles; in particular:
– excessive increase in hardness;
– decrease of compressioin set;
– decrease of the elastic characteristics (low elongation and high modulus value)
– poor heat resistance, which prevents the articles from being used under severe application conditions (T> 180°C).

Summing up, the benefits obtained during the processing step correspond to unacceptable drawbacks in the finished articles.

As a consequence, the use of plasticizers or lubricating agents is limited to low amounts (1-2 p.h.r.), which do not significantly affect the properties of the final cured articles, but which are, on the other hand, insufficient for fulfilling the above requirements.

It was observed, in particular, that the use of perfluorosiliconic oils allows the hardness to be reduced by 4-5 points; it shows, however, difficulties as to the blending and incorporation of said oils into the fluoroelastomer, due to the mutual incompatibility of the two polymeric systems. Furthermore, a lowering in curing rate and a decrease of compression set value and of thermal resistance are observed.

From US-A-3,069,401 it is known to use low-molecular-weight fluorinated copolymers of vinylidene fluoride, optionally in combination with the above indicated plasticizers, to endow the compounds with lower Mooney viscosity values, and better rheological characteristics during the processing and fabricating steps (see Du Pont's Viton®). Said copolymers do not contain terminal Br or I atoms.

Moreover, said type of plasticizers can only be used with ionic curing systems which use diaminic or bisphenolic derivatives, in the presence of an accelerating agent (see US-A-3,712,877).

With these curing sytems, the plasticizer polymer having low-molecular-weight is bonded to the fluoroelastomer during the vulcanization process.

On the other hand, no chemical bonds with the same plasticizer (type VITON $^{(R)}$LM) are formed, if the fluoroelastomers are formulated for being cured with peroxidic systems. This causes a worsening of the stability to acids, to steam and to heat, in polar solvents and to SF-type formulated oils, such as BP olex, characteristics which are typically required in fluorelastomers vulcanized with peroxides.

US-A-4,530,970 describes a fluoroelastomer composition comprising certain amounts of a peroxide-curable fluorinated copolymer having certain types of cure sites, a polyvinylidene fluoride in fine powder form having an average particle size of a most 20 μm, a peroxide and a polyallyl monomer as essential ingredients. Said composition is to be cured to yield lining material. According to said patent, the polyvinylidene fluoride may be of any kind but preferably has an average molecular weight of at least 100,000 from the viewpoint of reinforcing effect.

It has surprisingly been found that by using telomers and cotelomers of general formula (I) :

$$(I) \qquad R[(CH_2CF_2)_n(C_3F_6)_m(C_2F_4)_p(C_2F_3Cl)_q] X$$

wherein X is either Br or I; the units with the subscripts $\underline{n}$, $\underline{m}$, $\underline{p}$, $\underline{q}$, are randomly distributed along the telomer chain, R is a linear or branched $C_1$-$C_{20}$ alkyl radical, which can also contain halogen atoms, and, optionally, ester or ether groups, and wherein:
$\underline{n}$ = integer of from 1 to 30;
$\underline{m}$ = integer of from 0 to 10;
$\underline{p}$ and $\underline{q}$ are integers comprised within the range of from 0 to 20, as additives in amounts of from 0.5 to 10 parts by weight per 100 parts of rubber (p.h.r.), and preferably of from 1 to 3 p.h.r., said additives having an average molecular weight preferably comprised within the range of from 600 to 2,500, compositions can be obtained which have the same formulation, the same agents (rubber, cross-linking agent, acid acceptors) as the prior art compositions but show a better behaviour both regarding processability, as evidenced by the observed lowering of minimum torque, and extrudability (Garvey test), and as regards elastomechanical properties and adhesion of the cured article to metal substrates.

By operating with the suitable amounts of the additives of the present invention, these do not sensibly interfere with the curing system: in fact, vulcanization tests carried out according to ASTM D2084 with a Monsanto oscillating-disc rheometer, did not show any meaningful differences with respect to curing rate and curing yield.

An increase in cross-linking rates is observed, on the contrary, when the elastomeric matrix contains, besides the above mentioned type of elastomer, also a further elastomer comprising hydrogen-containing olefin, such as tetrafluoroethylene/propylene copolymer (AFLAS[R] or an ethylene/propylene/diene terpolymer (EPDM).

In any case, a reduction in minimum torque - an index of better processability of the compounds - was evidenced.

Furthermore, the bromine or iodine containing additive forms a chemical bond wiht the elastomeric chain during the curing process.

In fact, by subjecting the additive-containing composition to extraction tests with suitable solvents, the additive is recovered from the extraction liquid. On the contrary, when the additive-containing blend is cured, a subsequent extraction with the same solvent does not lead to the recovery of the additive from the liquid.

The preparation of the additives of the present invention can be carried out by telomerizing vinylidene fluoride either alone or in mixture with one or more of the fluorinated olefins represented by the above general formula (I), in the presence of a free-radical polymerization initiator and of a telogen of general formula RX, wherein X is either Br or I and R is a radical of the type as indicated in the general formula (I), at a temperature comprised within the range of from 0 to 200°C. The telomerization is carried out in a liquid phase constituted by the telogen containing the monomers, in the presence, or not, of an inert solvent.

Obsiously, the telomer product can actually be also constituted by a mixture of individual cotelomers having different $\underline{n}$, $\underline{m}$, $\underline{p}$, $\underline{q}$, indices. In the examples, the average values of these indices are reported.

These cotelomers and telomers, wherein $\underline{m}^+\underline{n}^+\underline{p}$ is at least equal to 1, are disclosed in EP-A-251 284.

Useful telogens are dibromodifluoromethane, 1,2-dibromotetrafluoroethane, trifluoromethyl iodide, bromo - trichloromethane, 1-bromo-perfluorobutane, 2-bromo-propane, tert. butyl bromide.

As free-radical initiators, all those known from the art of the free-radical polymerization, such as the peroxides and azo-compounds, are useful. Among the peroxides, in particular di-tert.butylperoxide, benzoylperoxide, dicumylperoxide, bis-peroxycarbamates and bis-peroxy-carbonates, etc., can be used.

The amount of free-radical initiator, relative to the sum of total fluorinated olefins is comprised within the range of from 0.01% to 10% by mol, preferably of from 1% to 5%.

Particularly useful are the products having an average molecular weight comprised within the range of from 600 to 2500.

The additives according to the present invention are used in amounts comprised within the range of from 0.5 to 10 parts, preferably 1 to 3 parts by weight per 100 parts of fluoroelastomer of the indicated type.

These additives impart the fluoroelastomeric composition with the following characteristics:
– good processability, in particular as regards the processing by extruder;
– improved low-temperature properties of the vulcanizate (low $T_g$);
– enhanced compatibility of the fluoroelastomers with non-fluorinated elastomers, with an improved vulcanization rate of such blends;
– improved elastomeric properties of the cured article;
– better thermal and chemical stability of the cured article.

As typical peroxy curable fluoro-elastomers suitable for use in the present invention, there can be cited; $CH_2=CF_2/C_3F_6$, the vinylidene fluoride/hexafluoropropene/tetrafluoroethylene terpolymers containing peroxidic cure sites, the vinylidene fluoride/chlorotrifluoroethylene copolymers which optionally contain tetrafluoroethylene units, fluoroelastomeric copolymers of $C_2F_4$ and $C_3H_6$, terpolymers of $C_3F_6$, $CH_2=CF_2$ and perfluoroalkylvinylether and the fluorosiliconic rubbers containing peroxidic cure sites, as well as blends of rubbers, at least one of which is curable with peroxides or with mixed vulcanization systems, in particular blends of fluoroelastomer based on $CH_2=CF_2$ and on an elastomeric $C_2F_4/C_3H_6$ copolymer, type AFLAS [R], $C_2F_4$ with perfluoroalkylvinylether (Kalrez [R]) and blends of a fluoroelastomer based on $CH_2=CF_2$ and en EPDM terpolymer.

As ingredients for obtaining vulcanizable compositions of the above fluoroelastomers, those known in the art, such as those set forth below, are used.

### Peroxidic Curing Agent

It is constituted by an organic peroxide, such as, e.g.: benzoylperoxide, dicumylperoxide, 2,5-dimethyl-2,5-di-(tert.butyl-peroxy)-hexane, alpha, alpha'-bis-(tert.butylperoxy)-diisopropylbenzene, aliphatic or cyclic bis-peroxycarbamates.

### Vulcanization Co-agent

It is constituted by an unsaturated di-, tri- or polyfunctional compound, such as, e.g., triallylcyanurate, triallylisocyanurate, divinylbenzene, m-phenylene-bis-(maleic acid imide).

### Reinforcing Agents

Carbon black, silica, etc.

### Acidity acceptors

E.g.: lead, zinc, calcium and magnesium oxides.
The following examples are supplied for illustrative purposes only.

### EXAMPLES 1-12

According to the usual blending techniques, rubber blends were prepared, containing the ingredients shown in Tables 1, 2, 3. On the so-prepared compositions, the tests and measurements indicated in Tables 1, 2, 3 were carried out.

### Ingredients used in the blends

### Elastomer 1

A terpolymer of $CH_2=CF_2/C_3F_6/C_2F_4$ in a 2:1:1 molar ratio, containing as the cure site monomer a brominated olefin, having a Mooney viscosity ML (1+4) at 100°C of 104, and a total bromine content of 3,500 ppm (VITON[R] GF).

### Elastomer 2

A copolymer of $C_2F_4/C_3H_6$ in a 1:1 molar ratio, having a Mooney viscosity ML (1+4) at 100°C of 130 (AFLAS [R]).

### Elastomer 3

A copolymer of $CH_2=CF_2/C_3F_6$ in a 79/21 molar ratio, having a Mooney viscosity ML (1+4) at 100°C of 65, and containing 0.2% by weight of bromine, deriving from end groups.

### Luperco[R] 101 XL

2,5-Dimethyl-2,5-di-(tert-1-butylperoxy)-hexane: product at 45% by weight, with 55% of inert fillers.

### TAIC

Triallylisocyanurate.

### MT Black

Carbon black for rubbers (ASTM N 990).

Accelerating Agent

1-Chloro-1-benzyl-1,1-diphenyl-N-diethyl-phosphoranamine.

Additive 1 (Telomer)

The additive was prepared by telomerizing vinylidene fluoride (VDF) in an autoclave in the presence of an equimolar amount of 1,2-dibromotetrafluoroethane ($CF_2Br$-$CF_2Br$), and of di-tert.butylperoxide, as the free-radical initiator, at 130°C for 2 hours. The reaction mixture was cooled to room temperature and unreacted VDF and $CF_2Br$-$CF_2Br$, and the residues of the free-radical initiator were distilled off.

The telomer was analysed by $^{19}$F-N.M.R., and had the following average formula:

$$CF_2Br\text{-}CF_2(CH_2CF_2)_nBr$$

$\underline{n}$ having an average value of 8.2.

The average molecular weight ($\overline{M}$), measured by osmometry, was 800, the glass transition temperature ($T_g$) was -90°C.

Additive 2 (VDF/$C_3F_6$ Cotelomer)

The product was prepared by cotelomerizing a mixture of VDF/$C_3F_6$ in a 70/30 molar ratio in the presence of $CF_2Br$-$CF_2Br$ (20% by mol referring to the total of VDF and $C_3F_6$ olefins) and of di-tert.butylperoxide.

Its average formula was, according to $^{19}$F -N.M.R. analysis, $CF_2Br\text{-}CF_2(VDF)_n(C_3F_6)_mBr$, with $\underline{n}/\underline{m}$ = 4.5, $M_n$ = 2,200 and $T_g$ = -60°C. The product was isolated as described for Additive 1; cotelomers of VDF with $C_3F_6$ can be prepared as disclosed in EP-A-251 284.

Additive 3 (VDF/TFE Cotelomer)

This additive was prepared by operating as disclosed for Additive 2, by cotelomerizing a mixture of VDF/$C_2F_4$ in a 90/10 molar ratio in the presence of $CF_3(CF_2)_6Br$ (telogen agent), in an equimolar amount referring to olefins VDF and $C_2F_4$, at 130°C for 1 hour in an autoclave. From the $^{19}$F-N.M.R. analysis, the cotelomer had the average formula

$$CF_3(CF_2)_6(VDF)_n(TFE)_pBr$$

with an $\underline{n}/\underline{p}$ ratio of 7.1, and an average molecular weight, determined by osmometry, of 2,100.

EXAMPLE 13

As blend was formulated as shown in Table 1, Example 3. A portion of the blend was then treated with 1,2,2-trichlorotrifluoroethane (FC 113) for 2 hours at room temperature. The extract was freed from the solid particles present, and subjected, to I.R. and N.M.R. analyses. The spectra indicated that the product was Additive 1.

Another portion of the blend was press-cured at 170°C for 10 minutes, and post-cured in an oven for 16 hours at 250°C.

After cooling, a portion of the cured fluoroelastomer composition was treated with FC 113 for 2 hours at room temperature. Practically no compound was extracted; this demonstrates that Additive 1 formed a chemical bond with the rubber during the curing process.

EP 0 251 285 B1

T A B L E   1

| EXAMPLE | | 1 | 2 | 3 | 4 | 5 |
|---|---|---|---|---|---|---|
| ELASTOMER 1 | parts by weight | 100 | 100 | 100 | 100 | 100 |
| ADDITIVE 1 | parts by weight | – | 1 | 2 | – | – |
| ADDITIVE 2 | parts by weight | – | – | – | 1 | 2 |
| LUPERCO®XL 101 | parts by weight | 3 | 3 | 3 | 3 | 3 |
| TAIC | parts by weight | 3 | 3 | 3 | 3 | 3 |
| PbO | parts by weight | 3 | 3 | 3 | 3 | 3 |
| MT BLACK | parts by weight | 30 | 30 | 30 | 30 | 30 |

THERMOMECHANICAL CHARACTERISTICS

ODR at 180°C  (1)

| | 1 | 2 | 3 | 4 | 5 |
|---|---|---|---|---|---|
| Min. Torque, (inch·pounds) $cm-kg$ | 26.5(23) | 23.6 (20.5) | 21.9(19) | 23.0(20) | 21.3 (18.5) |
| ts 10 (minutes) | 1 min 6 sec | 1 min 6 sec | 1 min 10 sec | 1 min 8 sec | 1 min 11 sec |
| ts 50 (minutes) | 2 minutes | 2 min 13 sec | 2 min 18 sec | 2 min 15 sec | 2 min 20 sec |
| Max. Torque (inch·pounds) $cm-kg$ | 120(104) | 106(92) | 101(88) | 113(98) | 108 (94) |

MOONEY VISCOSITY MS at 135°C  (2)

| | 1 | 2 | 3 | 4 | 5 |
|---|---|---|---|---|---|
| – Minimum Value | 39 | 36 | 34 | 35 | 33 |
| – Minutes for an increase of 15 points (t15) | 12 min 30 sec | 13 min 10 sec | 13 min 30 sec | 13 min 30 sec | 14 minutes |

TABLE 1 (cont.d)

| EXAMPLE | | 1 | 2 | 3 | 4 | 5 |
|---|---|---|---|---|---|---|
| **VULCANIZATION** | | | | | | |
| Press 170°C x 10 minutes | | | | | | |
| Oven 250°C x 10 hours | | | | | | |
| Modulus at 100% (MPa) | (3) | 6.5 | 5.5 | 5.0 | 5.4 | 5.1 |
| Tensile Strength (MPa) | (3) | 20.0 | 18.5 | 18.0 | 18.7 | 17.8 |
| Elongation at Break (%) | (3) | 214 | 231 | 240 | 230 | 245 |
| IRHD Hardness | (4) | 74 | 73 | 72 | 72 | 71 |
| **CURED ARTICLE** | | | | | | |
| Processability | (5) | | | | | |
| Flow Rate (a) (g/minute) | | 30 | 32 | 35 | 33 | 36 |
| Garvey Rating (b) | | 6 | 8 | 9 | 8 | 9 |
| **LOW-TEMPERATURE CHARACTERISTICS** | | | | | | |
| Brittle point (°C) | (6) | -35/-40 | -37/-42 | -39/-44 | -37/-42 | -40/-45 |

(1) According to ASTM D-2084
(2) According to ASTM D-1646
(3) According to ASTM D-412
(4) According to ASTM D-1415 on 6-mm thick specimens
(5) According to ASTM D-2230-78 (a) Method B, (b) Method A System B
(6) According to ASTM D-746

EP 0 251 285 B1

| EXAMPLE | | 6 | 7 | 8 | 9 |
|---|---|---|---|---|---|
| ELASTOMER 1 | parts by weight | 70 | 70 | 70 | 70 |
| ELASTOMER 2 (AFLAS) | parts by weight | 30 | 30 | 30 | 30 |
| ADDITIVE 3 | parts by weight | – | 1 | 2 | 3 |
| LUPERCO®XL 101 | parts by weight | 3 | 3 | 3 | 3 |
| TAIC | parts by weight | 3 | 3 | 3 | 3 |
| PbO | parts by weight | 3 | 3 | 3 | 3 |
| MT BLACK | parts by weight | 30 | 30 | 30 | 30 |
### THERMOMECHANICAL CHARACTERISTICS

| | | 6 | 7 | 8 | 9 |
|---|---|---|---|---|---|
| ODR at 180°C | (1) | | | | |
| Min. Torque, (inch·pounds) $cm-kg$ | | 23.0 (20) | 20.7 (18) | 19.6 (17) | 18.4 (16) |
| ts 10 (minutes) | | 1 min 7 sec | 1 min 12 sec | 1 min 18 sec | 1 min 20 sec |
| ts 50 (minutes) | | 2 min 16 sec | 2 min 36 sec | 2 min 42 sec | 2 min 46 sec |
| Max. Torque (inch·pounds) $cm-kg$ | | 109 (95) | 100 (87) | 98 (85) | 96 (83) |
### MOONEY VISCOSITY MS at 135°C     (2)

| | 6 | 7 | 8 | 9 |
|---|---|---|---|---|
| – Minimum Value | 36 | 34 | 33 | 32 |
| – Minutes for an increase of 15 points (t15) | 18 min 15 sec | 19 min 25 sec | 19 min 40 sec | 20 minutes |

T A B L E  2  (cont.d)

| EXAMPLE | | 6 | 7 | 8 | 9 |
|---|---|---|---|---|---|
| **VULCANIZATION** | | | | | |
| Press 170°C x 10 minutes | | | | | |
| Oven 250°C x 10 hours | | | | | |
| Modulus at 100% (MPa) | (3) | 6.8 | 6.0 | 6.0 | 5.9 |
| Tensile Strength (MPa) | (3) | 201 | 204 | 200 | 190 |
| Elongation at Break (%) | (3) | 220 | 250 | 240 | 250 |
| IRHD Hardness | (4) | 73 | 72 | 71 | 70 |
| Compression Set, O-Ring | | | | | |
| (Ø 25.4x3.53 mm) | | | | | |
| at200°Cx70 hours | (5) | 42 | 39 | 36 | 37 |
| **PROCESSABILITY** | (6) | | | | |
| Flow Rate (a) (g/minute) | | 30 | 32 | 36 | 36 |
| Garvey Rating (b) | | 8 | 10 | 11 | 12 |

(1) According to ASTM D-2084
(2) According to ASTM D-1646
(3) According to ASTM D-412
(4) According to ASTM D-1415 on 6-mm thick specimens
(5) According to ASTM D-395 Method B
(6) According to ASTM D-2230-78 (a) Method B, (b) Method A System B

EP 0 251 285 B1

EP 0 251 285 B1

T A B L E   3

| EXAMPLE | | 10 | 11 | 12 |
|---|---|---|---|---|
| ELASTOMER 3 | parts by weight | 70 | 70 | 70 |
| ELASTOMER 2 (AFLAS) | parts by weight | 30 | 30 | 30 |
| ADDITIVE 2 | parts by weight | − | 1.5 | − |
| ADDITIVE 3 | parts by weight | − | − | 1.5 |
| BISPHENOL AF | parts by weight | 1.1 | 1.1 | 1.1 |
| ACCELERATOR | parts by weight | 0.5 | 0.5 | 0.5 |
| LUPERCO® XL 101 | parts by weight | 2 | 2 | 2 |
| TAIC | parts by weight | 2 | 2 | 2 |
| CARNAUBA WAX | parts by weight | 1 | 1 | 1 |

THERMOMECHANICAL CHARACTERISTICS

| ODR at 180°C (1) | | | |
|---|---|---|---|
| Min. Torque, (inch·pounds) $cm·kg$ | 16.1(14) | 13.8(12) | 13.8(12) |
| ts 10 (minutes) | 1 min 33 sec | 1 min 45 sec | 1 min 50 sec |
| ts 50 (minutes) | 3 min 45 sec | 4 min 30 sec | 7 min 42 sec |
| Max. Torque (inch·pounds) $cm·kg$ | 138 (120) | 130 (113) | 102 (89) |

MOONEY VISCOSITY MS at 135°C     (2)

| | 10 | 11 | 12 |
|---|---|---|---|
| − Minimum Value | 26 | 23 | 23 |
| − Minutes for an increase of 15 points (t15) | 15 min 15 sec | 18 min 15 sec | 24 minutes |

TABLE 3 (cont.d)

| EXAMPLE | | 10 | 11 | 12 |
|---|---|---|---|---|
| VULCANIZATION | | | | |
| Press 170°C x 10 minutes | | | | |
| Oven 250°C x 10 hours | | | | |
| Modulus at 100% (MPa) | (3) | 7.6 | 7.5 | 7.2 |
| Tensile Strength (MPa) | (3) | 15.5 | 16.5 | 17.0 |
| Elongation at Break (%) | (3) | 175 | 195 | 200 |
| IRHD Hardness | (4) | 75 | 75 | 76 |
| PROCESSABILITY | (6) | | | |
| Flow Rate (a) (g/minute) | | 31 | 33 | 35 |
| Garvey Rating (b) | | 11 | 13 | 14 |

(1) According to ASTM D-2084
(2) According to ASTM D-1646
(3) According to ASTM D-412
(4) According to ASTM D-1415 on 6-mm thick specimens
(5) According to ASTM D-395 Method B
(6) According to ASTM D-2230-78 (a) Method B, (b) Method A System B

EP 0 251 285 B1

## Claims

1. Fluoroelastomeric composition curable with peroxides or with mixed peroxidic and ionic curing systems and comprising additives in an amount of from 0.5 to 10 parts by weight per 100 parts by weight of fluoroelastomer, said additives having the general formula (I):

(I)    $R[(CH_2CF_2)_n(C_3F_6)_m(C_2F_4)_p(C_2F_3Cl)_q]X$

wherein X is Br or I; the units in parentheses are randomly distributed along the telomer chain, R is a linear or branched $C_1$-$C_{20}$ alkyl radical, which can also-contain halogen atoms, and, optionally, ester or ether groups, and wherein:

$\underline{n}$ = integer of from 1 to 30;

$\underline{m}$ = integer of from 0 to 10;

$\underline{p}$ and $\underline{q}$ are integers of from 0 to 20.

2. Composition according to claim 1, wherein the additive has an average molecular weight of from 600 to 2,500.

3. Composition according to claim 1 or 2, wherein the additive is used in an amount of from 1 to 3 parts by weight per 100 parts by weight of fluoroelastomer.

4. Composition according to any one of claims 1 to 3, wherein the fluoroelastomer is selected from the following elastomers:

a) fluoroelastomeric copolymers of $CH_2=CF_2$ and $C_3F_6$ and, optionally, $C_2F_4$;

b) fluoroelastomeric copolymers of $CH_2=CF_2$ and chlorotrifluoroethylene and, optionally, $C_2F_4$;

c) fluoroelastomeric terpolymers of $C_3F_6$, $CH_2=CF_2$ and perfluoroalkylvinylether;

d) fluoroelastomeric copolymers of $C_2F_4$ and $C_3H_6$; said elastomers containing peroxidic cure sites.

5. Compositions according to any one of claims 1 to 3, wherein the fluoroelastomer is a blend of an elastomer based on $CH_2=CF_2$ and of an elastomeric $C_2F_4/C_3F_6$ copolymer.

## Patentansprüche

1. Fluorelastomere Zusammensetzung, die mit Peroxiden oder gemischten peroxidischen und ionischen Härtungssystemen härtbar ist und Additive in einer Menge von 0,5 bis 10 Gew.-Teilen pro 100 Gew.-Teile des Fluorelastomers umfaßt, wobei die Additive die allgemeine Formel (I) besitzen:

(I)    $R[(CH_2CF_2)_n(C_3F_6)_m(C_2F_4)_p(C_2F_3Cl)_q]X$

worin X Br oder I ist; die Einheiten in Klammern statistisch entlang der Telomer-Kette verteilt sind, R ein geradkettiger oder verzweigter $C_1$-$C_{20}$ Alkylrest ist, der auch Halogenatome und gegebenenfalls Ester- oder Ethergruppen enthalten kann, und worin:

n = eine ganze Zahl von 1 bis 30;

m = eine ganze Zahl von 0 bis 10;

p und q ganze Zahlen von 0 bis 20 sind.

2. Zusammensetzung nach Anspruch 1, worin das Additiv ein durchschnittliches Molekulargewicht von 600 bis 2500 aufweist.

3. Zusammensetzung nach Anspruch 1 oder 2, worin das Additiv in einer Menge von 1 bis 3 Gew.-Teilen pro 100 Gew.-Teile des Fluorelastomers eingesetzt wird.

4. Zusammensetzung nach irgendeinem der Ansprüche 1 bis 3, worin das Fluorelastomer aus den folgenden Elastomeren ausgewählt ist:

a) fluorelastomere Copolymere von $CH_2=CF_2$ und $C_3F_6$ und gegebenenfalls $C_2F_4$;

b) fluorelastomere Copolymere von $CH_2=CF_2$ und Chlortrifluorethylen und gegebenenfalls $C_2F_4$;

c) fluorelastomere Terpolymere von $C_3F_6$, $CH_2=CF_2$ und Perfluoralkylvinylether;

d) fluorelastomere Copolymere von $C_2F_4$ und $C_3H_6$; wobei die Elastomere Peroxid-Härtungsstellen enthalten.

5. Zusammensetzungen nach irgendeinem der Ansprüche 1 bis 3, worin das Fluorelastomer eine Mischung eines Elastomers auf $CH_2=CF_2$-Basis und eines elastomeren $C_2F_4/C_3F_6$-Copolymers ist.

## Revendications

1. Composition fluoroélastomère durcissable à l'aide deperoxydes ou de systèmes mixtes de durcissement peroxydique et ionique et comprenant des additifs en quantité de 0,5 à 10 parties en poids pour 100 parties en poids de fluoroélastomère, ces additifs répondant à la formule générale (I):

(I) $R[(CH_2CF_2)_n(C_3F_6)_m(C_2F_4)_p(C_2F_3Cl)_q] X$

dans laquelle X est égal à Br ou I; les motifs entre parenthèses sont distribués statistiquement le long de la chaîne télomère; R représente un radical alkyle linéaire ou ramifié en $C_1$ à $C_{20}$, pouvant également contenir des atomes d'halogène, et, éventuellement, des groupes ester ou éther, et dans laquelle:

$n$ = un nombre entier de 1 à 30;

$m$ = un nombre entier de 0 à 10;

$p$ et $q$ sont des nombres entiers de 0 à 20.

2. Composition selon la revendication 1, caractérisée en ce que le poids moléculaire moyen de l'additif est compris entre 600 et 2 500.

3. Composition selon la revendication 1 ou 2, caractérisée en ce que l'additif est utilisé en quantité de 1 à 3 parties en poids pour 100 parties en poids du fluoroélastomère.

4. Composition selon l'une quelconque des revendications 1 à 3, caractérisée en ce que le fluoroélastomère est choisi parmi les élastomères suivants:

(a) copolymères fluoroélastomères de $CH_2$=$CF_2$ et $C_3F_6$ et, éventuellement, $C_2F_4$;

(b) copolymères fluoroélastomères de $CH_2$=$CF_2$ et chlorotrifluoroéthylène et, éventuellement, $C_2F_4$,:

(c) terpolymères fluoroélastomères de $C_3F_6$, $CH_2$=$CF_2$ et perfluoroalkylvinyléther;

(d) copolymères fluoroélastomères de $C_2F_4$ et $C_3H_6$; ces élastomères contenant des sites de vulcanisation peroxydique.

5. Compositions selon l'une quelconque des revendications 1 à 3, caractérisées en ce que le fluoroélastomère est un mélange d'un élastomère à base de $CH_2$=$CF_2$ et d'un copolymère élastomère $C_2F_4$/$C_3F_6$.